# FASCICULE DE BREVET EUROPEEN

(11) **EP 0 469 969 B1**
(45) Date de publication et mention de la délivrance du brevet: **21.12.1994**
(21) Numéro de dépôt: 91402082.1
(22) Date de dépôt: 25.07.1991
(51) Int. Cl.: B60N 2/20

(54) **Dispositif élastique de rappel d'un dossier de siège notamment de véhicule**
Elastische Rückführungsvorrichtung insbesondere einer Fahrzeugsitzrückenlehne
Elastic return device particularly for a vehicle seat backrest

(30) Priorité: 30.07.1990 FR 9009680
(43) Date de publication de la demande: 05.02.1992
(73) Titulaire: BERTRAND FAURE AUTOMOBILE, F-78390 Bois d'Arcy (FR)
(72) Inventeur: Cillière, François, F-61100 Flers (FR); Baloche, François, F-61100 Flers (FR)
(74) Mandataire: Madeuf, René Louis

(56) Documents cités:
- EP-A- 0 006 610
- EP-A- 0 263 003
- EP-A- 0 341 105
- DE-B- 1 753 339
- US-A- 4 394 047

## Description

De plus en plus, les véhicules automobiles sont des véhicules dits à trois portes, deux portes latérales et un hayon arrière. Du fait des deux portes latérales, on est amené à utiliser des sièges coulissants dont on doit rabattre le dossier sur l'assise pour permettre un passage aise, vers la banquette arrière du véhicule, des passagers. De plus, chaque siège avant doit avoir un dossier réglable en inclinaison mais également rabattable vers l'arrière de façon à constituer avec l'assise de la banquette arrière deux couchettes.

Ces servitudes pour les dossiers de siège nécessitent le montage sur les mécanismes d'articulation du dossier de chaque siège par rapport à l'assise non seulement des mécanismes à réglage discontinu mais également des organes complémentaires facilitant, soit l'inclinaison vers l'avant, soit l'inclinaison vers l'arrière du dossier, de la position de dégagement pour le passage du ou des passagers arrière dans les véhicules à deux portes, mais également à la position horizontale du dossier pour la fonction dite couchette. Aussi ces organes complémentaires doivent être non seulement hautement résistants peu encombrants mais aussi très simples à fabriquer et à monter de façon à être bon marche pour des sièges de véhicules.

On connaissait déjà des moyens pour donner une solution à ce problème, mais ces moyens étaient souvent encombrants, plus ou moins fiables et, de toute façon, chers. C'est pourquoi on a été amené à repenser le problème en s'imposant une solution simple, d'une réalisation peu encombrante et d'un prix de revient acceptable.

La présente invention propose donc l'adjonction, sur un mécanisme d'articulation du dossier d'un siège, d'un mécanisme complémentaire permettant l'abaissement vers l'avant du dossier avec un organe de rappel de force suffisante mais peu encombrant réalisant ainsi une solution robuste, simple et relativement bon marché.

On connaît à ce sujet par les documents EP-A-0 263 003 et DE-B-1 753 339 certains dispositifs élastiques de rappel d'un dossier de siège, notamment de véhicule.

EP-A-0 263 003 (correspondant au préambule de la revendication 1) montre ainsi un dispositif d'articulation permettant le débrayage sur une certaine valeur angulaire autorisant un grand déplacement du dossier sur l'assise du siège et comprenant un ressort hélicoïdal relié entre le flasque mobile et un levier de commande et n'agissant donc pas sur le dossier tandis que DE-B-1 753 339 montre un ressort hélicoïdal relié entre une partie fixe du siège et le dossier. Cependant, dans ce dernier document, le point d'accrochage du ressort sur la partie fixe du siège est fixe. Au contraire, dans la présente invention, le ressort est relié à la partie fixe du siège par l'intermédiaire d'une biellette articulée, ce qui permet d'utiliser un ressort de très forte puissance de traction mais de faible volume et de faible allongement.

Conformément à l'invention, le dispositif élastique de rappel du dossier d'un siège pour un véhicule à deux portes, dans lequel un dossier peut être rabattu sur l'assise pour permettre aux passagers d'accéder à la banquette arrière du véhicule, le dossier devant être replié vers la banquette arrière pour réaliser une couchette et pouvant être réglé selon diverses positions inclinées par rapport à l'assise du siège, comprend un mécanisme d'articulation comportant un flasque mobile pouvant être relié au dossier et un flasque fixe pouvant être relié à l'assise et est caractérisé par une biellette articulée sur un axe solidaire du flasque fixe et par un ressort hélicoïdal relié par sa première extrémité au flasque mobile et par sa seconde extrémité à l'extrémité libre de la biellette, ce ressort hélicoïdal étant décomprimé lorsque le flasque mobile est déplacé dans une position pour laquelle le dossier est replié sur l'assise et étant sous tension lorsque le flasque mobile est dans une position intermédiaire correspondant à une position sensiblement verticale du dossier, et étant complètement bandé lorsque le dossier est placé dans le prolongement de l'assise pour former une couchette, le ressort dépassant de très peu l'axe de l'articulation.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une élévation latérale d'un dispositif permettant le rappel en position normale d'un dossier de siège de véhicule.

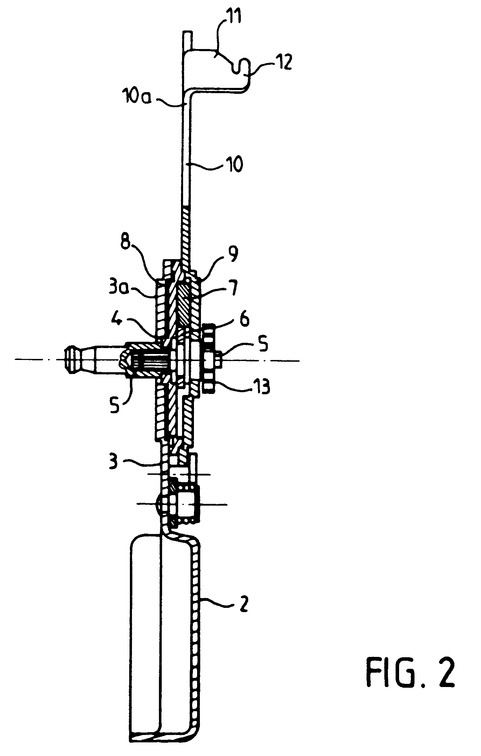

La fig. 2 est une vue de face en coupe du dispositif de la fig. 1.

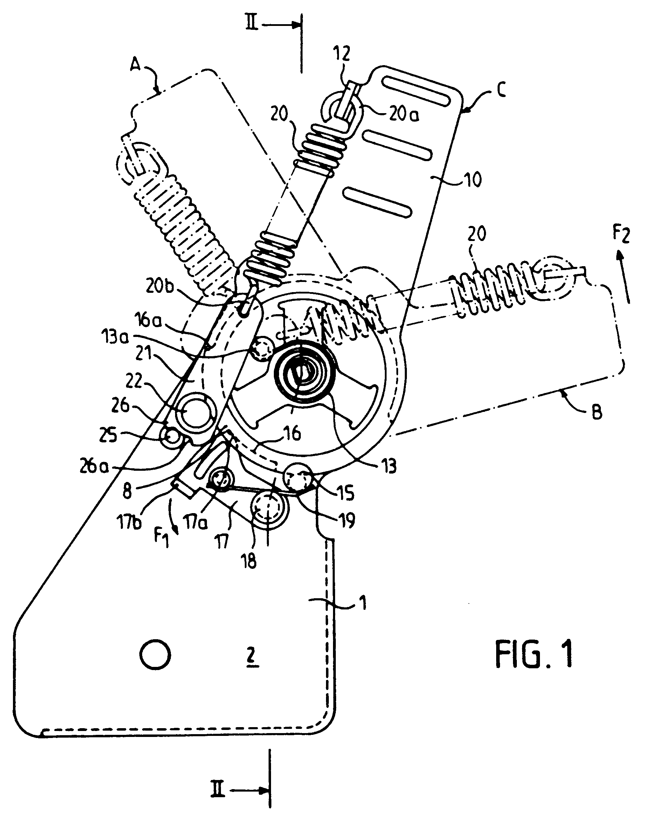

Comme on le voit à la fig. 1, une ferrure 1 solidaire de l'armature de l'assise du siège est fixée par tout moyen convenable de chaque côté de celle-ci et à l'arrière. Cette ferrure, présentant un large gousset 2 recouvrant la partie arrière basse de l'armature de l'assise et se prolongeant à sa partie supérieure 3 par un flasque dont la partie supérieure 3a forme une coupelle, est percée en son centre d'un trou 4 pour le passage d'un arbre cannelé 5 destiné à faire tourner une came 6 repoussant des grains 7. Ces derniers disposés à 120° les uns des autres présentent, à leur partie supérieure, une denture (non représentée) coopérant simultanément avec un disque 8 dentelé intérieurement solidaire de la coupelle 3a et un élément porte par la coupelle 9 du flasque 10 solidaire de la partie inférieure de l'armature du dossier du siège considéré. Ce flasque 10 raidi transversalement présente, à sa partie supérieure 10a, un doigt 11 courbé à 90° par rapport au flasque 10 et terminé par un crochet 12. L'arbre cannelé 5, qui traverse le disque 8, la came 6, la coupelle 9 du flasque 10, porte à son autre extrémité un ressort spiral 13 qui est accroché à une de ses extrémités 13a sur la coupelle 9, et tend à faire tourner l'arbre cannelé 5 de façon à placer la came 6 dans la position dans laquelle les grains 7 sont repoussés dans les dentures du disque 8 et de la coupelle 9 en bloquant ainsi le flasque mobile 10 sur le flasque fixe 3 solidaire de l'armature de l'assise.

Il s'agit ici du montage connu des articulations à grains disposées à 120° et le flasque mobile 10 est maintenu à sa partie inférieure par un ou des pions 15. Dans le cas présent, il est prévu également dans la partie inférieure du disque 8 un décrochement 16 permettant, au moyen d'un verrou 17 articulé sur un axe 18 solidaire du flasque fixe 3 et repoussé par un ressort 19, de bloquer par son extrémité 17a le disque 8 par rapport au flasque fixe 3 donc par rapport à la ferrure d'assise latérale 1.

Dans le cas où la patte 17b est tirée dans le sens de la flèche F₁ (voir fig. 1) le verrou 17 se dégage du décrochement 16 et, à ce moment, il est possible d'entraîner en rotation le disque 8 et le flasque latéral 10 solidaire du dossier vers deux positions A, B (voir fig. 1). Si ce mouvement tend à amener le dossier dans la position A (voir fig. 1, position représentée en traits mixtes), on constate qu'un ressort hélicoïdal 20 accroché à l'une de ses extrémités 20a sur le crochet 12 et à son autre extrémité 20b sur une biellette 21 articulée sur un axe 22 solidaire de la ferrure latérale 1 est complètement détendu, le verrou 17 est alors en coopération avec le décrochement 16a.

Pour la position B ou toute autre position intermédiaire entre la position A et la position B, la biellette 21 tourne autour de l'axe 22, se déplaçant jusqu'au moment où une butée 25 solidaire du flasque 1 vient contre l'extrémité 26a de la découpe 26 〈prévue à la partie basse de la biellette 21,〉 et en tendant le ressort 20 comme représenté à la fig. 1. Dans cette position, le dossier du siège est donc utilisé pratiquement à l'horizontale et peut donc former une couchette avec l'assise et le dossier du siège avant et l'assise de la banquette arrière comme cela est courant dans les véhicules.

Comme le ressort 20 dans la position B a été mis sous tension mais qu'en même temps il a effectué avec la biellette 21 une rotation importante pouvant dépasser 50°, on peut constater à la fig. 1 que, d'une part, la biellette 21 a basculé et, d'autre part, le ressort 20 a peu d'allongement, ce qui évite d'avoir un long ressort tout en ayant un effort de traction très important. En effet, le ressort 20 dépasse l'axe de l'articulation de très peu, ce qui permet dans un faible encombrement d'avoir un ensemble très puissant. Il est ainsi permis au dossier du siège d'être mis dans la position couchette constituée par le siège avant (assise et dossier) en relation avec l'assise de la banquette arrière.

Pour ramener le dossier de la position B à la position C, il suffit de déverrouiller les dentures des grains des dentures du flasque mobile 10 pour que le dossier se relève sous l'action du ressort dans le sens de la flèche F₂ (voir fig. 1). Cet effort a pour effet de faire pivoter la biellette 21 qui reprend alors la position représentée en trait plein à la fig. 1. En même temps, le ressort 20 s'est contracté pour revenir à la tension de la position C (voir fig. 1). L'effort du ressort 20 étant très limité aussi bien par la contrainte qu'il subit en passant de la position C à la position B que de la position B à la position C, on peut donc monter un ressort de petite dimension peu encombrant et d'un prix de revient très bas.

Ceci est à l'opposé des mécanismes utilisant des barres de torsion qui impliquaient des contraintes d'implantation et en particulier un volume important.

Il en est de même pour les ressorts à lames, pour les ressorts spiraux qui présentaient en plus l'inconvénient d'être onéreux.

Finalement, cette construction assure un débattement du dossier pouvant dépasser 90° et évite dans la position couchette les risques d'interférence du ou des ressorts 20 de traction avec la structure, soit avec la barre de conjugaison de mouvement sur un siège à double articulation, soit avec les tubes de structure d'assise et de dossier facilitant ainsi les garnissages du siège.

La solution apportée par la présente invention assure le rappel du dossier vers l'avant du véhicule, tout en permettant une grande amplitude de débattement de ce dossier assurant ainsi un meilleur confort d'utilisation, puisqu'il y a une faible variation du couple de rappel.

## Revendications

1. Dispositif élastique de rappel du dossier d'un siège pour un véhicule à deux portes, dans lequel un dossier peut être rabattu sur l'assise pour permettre aux passagers d'accéder à la banquette arrière du véhicule, le dossier devant être replié vers la banquette arrière pour réaliser une couchette et pouvant être réglé selon diverses positions inclinées par rapport à l'assise du siège, ledit dispositif élastique de rappel comprenant un mécanisme d'articulation comportant un flasque mobile (10) pouvant être relié au dossier et un flasque fixe (1, 3) pouvant être relié à l'assise et étant caractérisé par une biellette (21) articulée sur un axe (22) solidaire du flasque fixe et par un ressort hélicoïdal (20) relié par sa première extrémité (20a) au flasque mobile (10) et par sa seconde extrémité (20b) à l'extrémité libre de la biellette (21), ce ressort hélicoïdal étant décomprimé lorsque le flasque mobile est déplacé dans une position pour laquelle le dossier est replié sur l'assise et étant sous tension lorsque le flasque mobile est dans une position intermédiaire correspondant à une position sensiblement verticale du dossier, et étant complètement bandé lorsque le dossier est placé dans le prolongement de l'assise pour former une couchette, le ressort dépassant de très peu l'axe de l'articulation.

2. Dispositif selon la revendication 1, caractérisé en ce que la biellette (21) présente un dégagement (26) prévu à l'extrémité où elle est articulée audit flasque fixe, et en ce que ce flasque fixe est muni d'une butée (25) qui coopère avec le dégagement (26) afin de limiter l'angle de déplacement de ladite biellette.

## Claims

1. Elastic return device for a seat backrest of a two-door vehicle, wherein a backrest can be folded back on the sitting portion for allowing the passengers to have access to the vehicle backseat, the backrest having to be folded back to the backrest for forming a berth and being adjustable in various inclinations with respect to the sitting portion of the seat, said elastic return device comprising an articulation mechanism including a mobile flange (10) connectable to the backrest and a fixed flange (1, 3) connectable to the sitting portion and being characterised by a connection-rod (21) articulated onto a pin (22) which is rigidly connected to the fixed flange and by a helical spring (20) attached by its first end (20a) to the mobile flange (10) and by its second end (20b) to the free end of the connection-rod (21), this helical spring being decompressed when the mobile flange is moved into a position for which the backrest is folded over the sitting portion and being under tension when the mobile flange is in an intermediate position corresponding to a substantially upright position of the backrest, and being completely stressed when the backrest is positionned in the prolongation of the sitting portion for forming a berth, the spring over-passing the articulation axis only by a small extent.

2. Device according to claim 1, characterized in that the connection-rod (21) has a cut-out (26) provided at the end where it is articulated to said fixed flange, and in that this fixed flange is provided with an abutment (25) which cooperates with the cut-out (26) in order to limit the displacement angle of said connection-rod.

## Patentansprüche

1. Elastische Rückstellvorrichtung für die Rückenlehne eines Sitzes für ein zweitüriges Fahrzeug, bei dem eine Rückenlehne auf das Sitzuntergestell umgeklappt werden kann, um den Fahrgästen den Zugang zum Rücksitz des Fahrzeuges zu ermöglichen, wobei die Rückenlehne zum Rücksitz umgeklappt werden soll, um eine Liegefläche herzustellen, und in verschiedene, gegen die das Sitzuntergestell geneigte Stellungen eingestellt werden kann, wobei die elastische Rückstellvorrichtung einen Schwenkmechanismus mit einem beweglichen Flansch (10), der mit der Rückenlehne verbunden werden kann, und einem feststehenden Flansch (1, 3) umfaßt, der mit dem Sitzuntergestell verbunden werden kann,
und **gekennzeichnet** ist durch eine Schwinge (21), die an einer mit dem feststehenden Flansch fest verbundenen Achse (22) schwenkbar gelagert ist, und durch eine Schraubenfeder (20), die an ihrem ersten Endstück (20a) mit dem beweglichen Flansch (10) und an ihrem zweiten Endstück (20b) mit dem freien Ende der Schwinge (21) verbunden ist, wobei diese Schraubenfeder entlastet wird, wenn der bewegliche Flansch in eine Stellung verstellt wird, in der die Rückenlehne auf das Untergestell umgeklappt ist, und unter Zugspannung steht, wenn der bewegliche Flansch in einer Zwischenstellung steht, die einer im wesentlichen senkrechten Stellung der Rückenlehne entspricht, und vollständig gespannt wird, wenn die Rückenlehne in die Verlängerung des Untergestells verbracht wird, um eine Liegefläche zu bilden, wobei die Feder über die Gelenkachse sehr wenig hinausgeht.

2. Vorrichtung nach Anspruch 1,
dadurch **gekennzeichnet,** daß
die Schwinge (21) einen Absatz (26) an dem Endstück, an dem sie mit dem feststehenden Flansch schwenkbar verbunden ist, aufweist, und daß dieser feststehende Flansch mit einem mit dem Absatz (26) zusammenwirkenden Anschlag (25) versehen ist, um den Verstellwinkel der genannten Schwinge zu begrenzen.
